# EUROPÄISCHE PATENTSCHRIFT

(11) **EP 1 408 262 B1**
(45) Veröffentlichungstag und Bekanntmachung des Hinweises auf die Patenterteilung: **25.01.2006**
(21) Anmeldenummer: 03021530.5
(22) Anmeldetag: 24.09.2003
(51) Int. Cl.: F16K 1/12

(54) **Koaxialventil mit Dämpfungseinrichtung**
Coaxial valve with damper
Vanne coaxiale avec amortisseur

(30) Priorität: 09.10.2002 DE 10247097
(43) Veröffentlichungstag der Anmeldung: 14.04.2004
(73) Patentinhaber: müller co-ax ag, 74668 Forchtenberg (DE)
(72) Erfinder: Hirschlein, Heinz, 74670 Forchtenberg (DE); Frank, Roland, 74219 Möchmühl (DE)
(74) Vertreter: LENZING GERBER

(56) Entgegenhaltungen:
- WO-A-94/27069
- DE-A- 2 209 825
- GB-A- 969 825
- US-A- 6 116 571
- US-B1- 6 412 750

## Beschreibung

Die vorliegende Erfindung betrifft ein Coaxial-Ventil mit den Merkmalen des Oberbegriffs des Anspruchs 1.

Insbesondere pneumatisch gesteuerte Ventile zur Druckregelung neigen in bestimmten Betriebszuständen zum Schlagen, d.h. das Ventil öffnet und schließt in hoher Frequenz, wodurch es zu einer unangenehmen Geräuschentwicklung und im schlimmsten Fall zu einer Zerstörung des Ventils kommt. Dieser Schwingungszustand kann aufgrund der Kompressibilität des Steuermediums bzw. des Regelverhaltens des jeweils gewählten Antriebs eintreten. Durch eine geeignete Wahl von Dichtungen im Ventil, welche unterschiedliche Dämpfungsverhalten aufweisen, kann er vermindert bzw. vermieden werden. Nachteilig hierbei ist jedoch, daß die Ventile dann nur in bestimmten und vorher experimentell ermittelten Druck-Regelbereichen eingesetzt werden können. Auch ist eine Berechnung des Ventilverhaltens aufgrund der Kompressibilität des Steuermediums nur schwer möglich.

Aus der DE 19516442 ist z.B. ein Vakuumventil bekannt, bei dem die Dämpfungseinrichtung sowie die pneumatische Steuerung axial in Reihe zueinander angeordnet sind, was zu einer sehr großen Bauweise führt.

Coaxialventile sind hinreichend bekannt. So zeigen die WO 94/27069 und die US 6,412,750 beispielhaft pneumatisch oder hydraulisch gesteuerte Coaxialventile.

Aus der EP 1205697 ist ein Coaxialventil bekannt, welches über einen Antrieb und ein Dämpfungsglied verfügt. Das Dämpfungsglied ist jedoch nur im Bereich des geschlossenen Ventils wirksam. Eine Beeinflussung der Dämpfungswirkung von Außen ist nicht möglich.

Aufgabe der vorliegenden Erfindung ist es, ein pneumatisch gesteuertes Coaxial-Ventil mit einer Dämpfungseinrichtung in kompakter Bauweise auszubilden, um das unkontrollierte schnelle Öffnen und Schließen des Ventils zu verhindern bzw. zu unterdrücken.

Diese Aufgabe wird erfindungsgemäß mit einem Coaxial-Ventil mit den Merkmalen des Anspruchs 1 gelöst. Weitere erfindungsgemäße Ausgestaltungen des Coaxial-Ventils gem. Anspruch 1 ergeben sich durch die Merkmale der Unteransprüche.

Durch den vorteilhaften Einsatz einer Dämpfungseinrichtung, wird das ungewollte Schwingen des Ventilschließkörpers innerhalb eines großen Druck-Regelbereichs sicher vermieden. Die Dämpfungseinrichtung wird dabei vorteilhaft durch das Steuerrohr selbst gebildet und ist somit im Ventilgehäuse integriert, wodurch sich kleine und kompakte Baugrößen ergeben. Die Dämpfungseinrichtung wirkt dabei vorteilhaft direkt auf den Antrieb oder auf ein den Antrieb mit dem Ventilschließkörper verbindendes Zwischenteil. Im einfachsten Fall handelt es sich bei der Dämpfungseinrichtung um einen hydraulischen Dämpfer mit einem nicht kompressiblen Medium als Dämpfungsflüssigkeit. Vorteilhaft umgreift die Dämpfungseinrichtung das Steuerrohr des Coaxial-Ventils.

Die Dämpfungseinrichtung kann vorteilhafterweise einen Kolben in einem Zylindergehäuse aufweisen, dessen beide Arbeitsräume mittels eines Kanals bzw. einer BypaßLeitung miteinander verbunden sind. Der Kanal bildet dabei eine Strömungsverengung, durch die das in den Arbeitsräumen enthaltene Fluid bei Bewegung des Kolbens in dem Zylinder fließen muß. Der Kolben ist dabei vorteilhaft am Zwischenteil, welches den Antrieb mit dem Ventilschließkörper verbindet, angeordnet bzw. befestigt. Das Dämpfungsverhalten der Dämpfungseinrichtung läßt sich vorteilhaft durch den Strömungswiderstand des Kanals einstellen. Es ist dadurch möglich, die Art der Dämpfung durch die Wahl der Querschnittsfläche und die Länge des Kanals vorzugeben. Sofern der Kanal nicht im Kolben, sondern im Gehäuse des Ventils angeordnet ist, kann seine Querschnittsfläche vorteilhafterweise mittels einer Stelleinrichtung z.B. auch während des Betriebs des Ventils verändert werden, falls es im Betrieb zu einem Schlagen des Ventils kommen sollte, so daß durch das geänderte Dämpfungsverhalten die Schwingungen des Ventilschließkörpers unterdrückt werden. Die Stelleinrichtung kann hierbei in einer weiteren Ausgestaltung der Erfindung in Abhängigkeit des einzuregelnden Drucks die Dämpfung durch Einstellen des Strömungswiderstandes des Kanals variieren, so daß ein kritischer Betriebszustand sicher vermieden wird. Diese Stelleinrichtung wird dann vorteilhafterweise von der Steuerung des Ventilantriebs mit gesteuert.

Der Antrieb des Ventils kann z.B. ein elektropneumatischer Antrieb sein, mittels dem ein bestimmter Druck in einem Pneumatikzylinder einregelbar ist, in dem ein Kolben angeordnet ist, der starr mit dem Ventilschließkörper in Verbindung ist. Durch den Druck im Pneumatikzylinder wird der Ventilschließkörper mit einem entsprechenden Druck in Richtung Ventilsitz beaufschlagt, womit sich ein entsprechender Druck mittels des Ventils im Leitungssystem einstellen läst.

Anhand der Figur wird eine mögliche Ausführungsform der Erfindung näher beschrieben.

Die Figur zeigt ein Coaxial-Ventil bestehend aus den Gehäuseteilen 110, 113, 115. In dem Ventilgehäuse ist ein Steuerrohr 105 in axialer Längserstreckung des Coaxial-Ventils verschieblich angeordnet. Am Steuerrohr 105 ist ein Ventilschließkörper 102 angeordnet, der mit dem durch das Gehäuseteil 110 gebildeten Ventilsitz 101 zusammenwirkt. An der Außenwandung des Steuerrohrs 105 ist ein Kolbenteil 106 befestigt, insbesondere angeklebt, welches eine umlaufende Dichtung 106a trägt. Das Kolbenteil 106 unterteilt einen Hohlraum 107 eines Zylinders, welcher durch die Gehäuseteile 110, 113 gebildet ist, in zwei Arbeitsräume 108a, 108b. Ein elektropneumatischer Antrieb 111 erzeugt über einen Kanal 112 einen Druck in dem Arbeitsraum 108a, wodurch das Steuerrohr 105 bzw. der Ventilschließkörper 102 in Richtung Ventilsitz 101 druckbeaufschlagt wird. Eine das Steuerohr umgreifende Feder 109 beaufschlagt das Steuerrohr 105 zusätzlich mit einer geringen Kraft in die geschlossene Ventilstellung, damit bei nicht angesteuertem Ventil das Ventil schließt und nicht ungewollt Medium von einem zum anderen Anschluß gelangt.

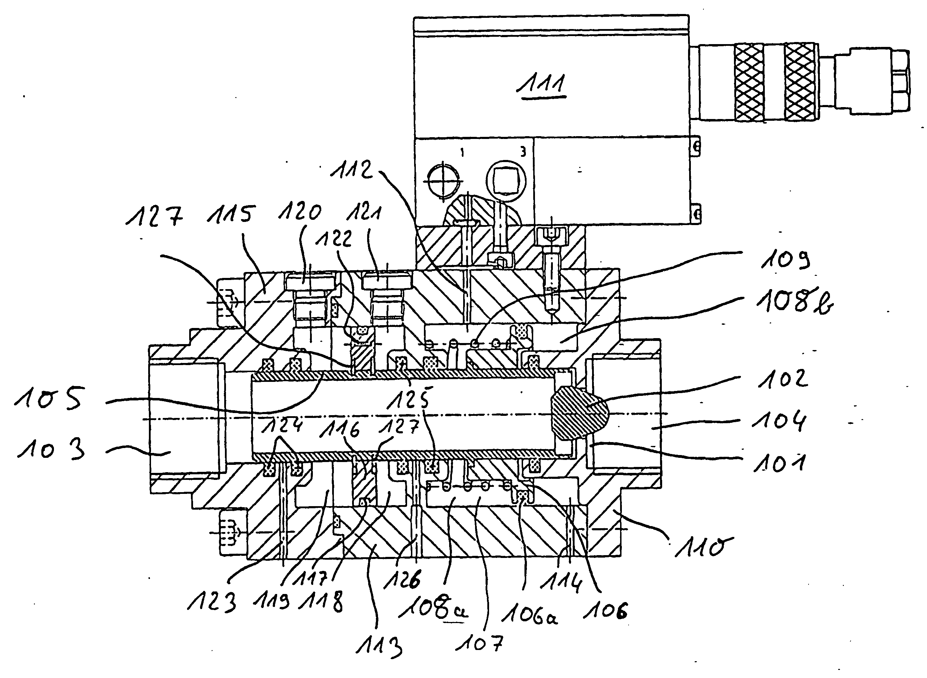

Die Gehäuseteile 113, 115 bilden einen weiteren das Steuerrohr 105 umgreifenden Zylinder, der zusammen mit einem Kolben 116, welcher insbesondere durch eine mittels Sicherungsringen am Steuerrohr 105 angeordnete Scheibe gebildet ist, zwei Arbeitsräume 118, 119 bildet. Die Scheibe 116 trägt eine umlaufende Dichtung 117 und liegt mit dieser abdichtend an der Innenwandung des Zylinders 113, 115 an. Die Scheibe 116 weist ferner einen axial verlaufenden Kanal 122 auf, der die beiden Arbeitsräume 118, 119 miteinander verbindet. Die Scheibe 116 mit ihrem Kanal 122 wirkt zusammen mit dem Zylinder als Dämpfungseinrichtung, welche funktionsgleich ist mit der in Figur 1 beschriebenen Dämpfungseinrichtung. Zur Funktionsweise wird daher auf die Beschreibung der Figur 1 verwiesen. Die beiden Arbeitsräume 118, 119 sind über Kanäle mit der Ventilgehäuseaußenseite verbunden, wobei die Kanäle im Betrieb des Ventils mittels Verschlußstopfen 120, 121 abdichtend verschlossen sind. Über die Kanäle können die Arbeitsräume mit einem inkompressiblem Medium gefüllt bzw. entlüftet werden. Dichtungen 124 dichten ferner die Anschlußseite 103 vom Arbeitsraum 119 der Dämpfungseinrichtung ab.

Dichtungen 125 trennen den Arbeitsraum 108a des Antriebs von dem Arbeitsraum 118 der Dämpfungseinrichtung. Ein Kanal 126 ist zwischen den beiden Dichtungen 125 angeordnet, so daß aus den Arbeitsräumen 108a bzw. 118 austretendes Medium von der Innenseite des Gehäuseteils 113 zur Ventilgehäuseaußenseite geführt wird und nicht in den jeweiligen anderen Arbeitsraum gelangen kann. Hierdurch wird eine Leckage frühzeitig angezeigt.

## Patentansprüche

1. Coaxial-Ventil, aufweisend ein im Ventilgehäuse (110, 113, 115) verschieblich gelagertes Steuerrohr (105), einen Ventilschließkörper (102), einen Ventilsitz (101) und einen pneumatischen Antrieb zur Bewegung des Ventilschließkörpers (102) zumindest in Richtung des Ventilsitzes, und das Coaxial-Ventil eine Dämpfungseinrichtung zur Dämpfung der Bewegung des Ventilschließkörpers (102) aufweist, wobei die Dämpfungseinrichtung das Steuerrohr (105) umgreift, wobei am Steuerrohr (105) zwei Kolben (106, 116) befestigt sind, welche mit ihren äußeren Mantelflächen abdichtend an der Gehäuseinnenwandung anliegen und wobei der eine der beiden Kolben zusammen mit dem Gehäuse die Arbeitsräume (108a, 108b) des Antriebs und wobei der andere der beiden Kolben zusammen mit dem Gehäuse die Arbeitsräume (118, 119) der Dämpfungseinrichtung bilden, wobei die Arbeitsräume (118, 119) der Dämpfungseinrichtung durch einen Kanal (122) miteinander verbunden sind, **dadurch gekennzeichnet, dass** das Gehäuse des Ventils über Öffnungen oder Kanäle verfügt, über die die Arbeitsräume (118, 119) der Dämpfungseinrichtung von außen befüllbar bzw. entlüftbar sind, wobei die Arbeitsräume (108a, 118) des Antriebs und der Dämpfungseinrichtung abdichtend voneinander getrennt sind.

2. Coaxial-Ventil nach Anspruch 1, **dadurch gekennzeichnet, dass** mittels eines einregelbaren oder vorgegebenen Drucks der Ventilschließkörper (102) in Richtung Ventilsitz (101) druckbeaufschlagbar ist.

3. Coaxial-Ventil nach einem der vorhergehenden Ansprüche, **dadurch gekennzeichnet, dass** der Antrieb über das Steuerrohr (105), den Ventilschließkörper (102) bewegt.

4. Coaxial-Ventil nach Anspruch 1, **dadurch gekennzeichnet, dass** der Kanal (122) im Kolben (116) oder dem bzw. den den Zylinder bildenden Ventilgehäuseteilen angeordnet ist.

5. Coaxial-Ventil nach Anspruch 4, **dadurch gekennzeichnet, dass** der Strömungswiderstand des Kanals bzw. Bypasses (122) einstellbar bzw. veränderbar ist.

6. Coaxial-Ventil nach einem der Ansprüche 4 oder 5, **dadurch gekennzeichnet, dass** die Arbeitsräume (118, 119) sowie der Kanal (122) der Dämpfungseinrichtung mit einem inkompressiblem Medium, insbesondere Öl gefüllt sind.

7. Coaxial-Ventil nach einem der vorhergehenden Ansprüche, **dadurch gekennzeichnet, dass** der Antrieb einen in einem Zylinder (107) angeordneten Kolben (106) aufweist, und der Kolben (106) zusammen mit dem Zylinder (107) zwei Arbeitsräume (108a, 108b) bildet.

8. Coaxial-Ventil nach Anspruch 1, **dadurch gekennzeichnet, dass** zwischen den Abdichtungen (125) der Arbeitsräume (108a, 118) des Antriebs und der Dämpfungseinrichtung ein Kanal (126) derart angeordnet ist, daß ein von einem der Arbeitsräume (108a, 118) austretendes und am Steuerrohr (105) entlang fließendes Fluid über den Kanal (126) aus dem Ventilgehäuse heraustreten kann.

9. Coaxial-Ventil nach Anspruch 1, **dadurch gekennzeichnet, dass** zumindest einer der Kolben ein gesondertes Teil ist, das insbesondere als Ring, Platte oder Scheibe ausgebildet ist, welches über das Steuerrohr (105) geschoben ist, und mittels Arretierungselementen (127), insbesondere Sicherungsringen, am Steuerrohr befestigt und/oder abgedichtet ist.

10. Coaxial-Ventil nach Anspruch 1 oder 9, **dadurch gekennzeichnet, dass** der Kolben (116) der Dämpfungseinrichtung einen axial verlaufenden Kanal (122) aufweist, welcher die beiden Arbeitsräume (118, 119) der Dämpfungseinrichtung miteinander verbindet.

11. Coaxial-Ventil nach Anspruch 1 oder 9, **dadurch gekennzeichnet, dass** das Ventilgehäuse einen Kanal aufweist, welcher die beiden Arbeitsräume der Dämpfungseinrichtung miteinander verbindet.

12. Coaxial-Ventil nach einem der vorhergehenden Ansprüche, **dadurch gekennzeichnet, dass** der die Arbeitsräume (118, 119) der Dämpfungseinrichtung bildende Hohlraum, der durch den Zylinder gebildet ist, mittels zweier Ventilgehäuseteile (113, 115) gebildet ist.

## Revendications

1. Vanne coaxiale, comprenant un tube de commande (105) monté mobile dans un boîtier de vanne (110, 113, 115), un corps de fermeture de vanne (102), un siège de vanne (101) et un entraînement pneumatique pour déplacer le corps de fermeture de vanne (102) au moins en direction du siège de vanne, et la vanne coaxiale comprend un dispositif d'amortissement afin d'amortir le mouvement du corps de fermeture de vanne (102), le dispositif d'amortissement enserrant le tube de commande (105), deux pistons (106, 116) étant fixés sur le tube de commande (105), lesquels s'appuient de manière hermétique contre la paroi intérieure du boîtier avec leurs surfaces d'enveloppe extérieures et l'un des deux pistons formant avec le boîtier les chambres de travail (108a, 108b) de l'entraînement et l'autre des deux pistons formant avec le boîtier les chambres de travail (118, 119) du dispositif d'amortissement, les chambres de travail (118, 119) du dispositif d'amortissement étant reliées par un canal (122), **caractérisée en ce que** le boîtier de la vanne dispose d'ouvertures ou de canaux par l'intermédiaire desquels les chambres de travail (118, 119) du dispositif d'amortissement peuvent être remplies de l'extérieur ou évacuées de leur air, les chambres de travail (108a, 108b) de l'entraînement et du dispositif d'amortissement étant hermétiquement séparées les unes des autres.

2. Vanne coaxiale selon la revendication 1, **caractérisée en ce qu'**au moyen d'une pression réglable ou prédéterminée, le corps de fermeture de vanne (102) peut être soumis à une pression en direction du siège de vanne (101).

3. Vanne coaxiale selon l'une des revendications précédentes, **caractérisé en ce que** l'entraînement déplace le corps de fermeture de vanne (102) par l'intermédiaire du tube de commande (105).

4. Vanne coaxiale selon la revendication 1, **caractérisée en ce que** le canal 122) est placé dans le piston (116) ou dans la ou les parties du boîtier de vanne formant le cylindre.

5. Vanne coaxiale selon la revendication 4, **caractérisée en ce que** la résistance à l'écoulement du canal ou de la dérivation (122) est réglable ou modifiable.

6. Vanne coaxiale selon la revendication 4 ou 5, **caractérisée en ce que** les chambres de travail (118, 119) ainsi que le canal (122) du dispositif d'amortissement sont remplis d'un fluide incompressible, en particulier de l'huile.

7. Vanne coaxiale selon l'une des revendications précédentes, **caractérisé en ce que** l'entraînement présente un piston (106) placé dans un cylindre (107), et le piston (106) forme deux chambres de travail (108a, 108b) avec le cylindre (107).

8. Vanne coaxiale selon la revendication 1, **caractérisée en ce qu'**entre les étanchéités (125) des chambres de travail (108a, 118) de l'entraînement et du dispositif d'amortissement est placé un canal (126) tel qu'un fluide sortant de l'une des chambres de travail (108a, 118) et s'écoulant le long du tube de commande (105) peut sortir du boîtier de vanne par le canal (126).

9. Vanne coaxiale selon la revendication 1, **caractérisée en ce qu'**au moins l'un des pistons est une pièce séparée qui est conformée en particulier en anneau, plaque ou disque, qui est enfilée sur le tube de commande (105) et est fixée sur le tube de commande et/ou rendue hermétique avec lui au moyen d'éléments d'arrêt (127), en particulier de bagues de fixation.

10. Vanne coaxiale selon la revendication 1 ou 9, **caractérisée en ce que** le piston (116) du dispositif d'amortissement présente un canal (122) d'extension axiale qui relie entre elles les deux chambres de travail (118, 119) du dispositif d'amortissement.

11. Vanne coaxiale selon la revendication 1 ou 9, **caractérisée en ce que** le boîtier de vanne présente un canal qui relie entre elles les deux chambres de travail du dispositif d'amortissement.

12. Vanne coaxiale selon l'une des revendications précédentes, **caractérisée en ce que** la cavité formant les chambres de travail (118, 119) du dispositif d'amortissement, cavité qui est formée par le cylindre, est formée au moyen de deux parties (113, 115) du boîtier de vanne.

## Claims

1. Co-axial valve, having a control tube (105) displaceably mounted in the body (110, 113, 115) of the valve, a valve plug (102), a valve seat (101) and a pneumatic drive for moving the valve plug (102) at least in the direction of the valve seat, and the co-axial valve has a damping means for damping the movement of the valve plug (102), the damping means fitting round the control tube (105) and there being fastened to the control tube (105) two pistons (106, 116) which rest against the inner wall of the body, with a seal, by their outer circumferential faces, and one of the two pistons, together with the body, forming the working chambers (108a, 108b) of the drive and the other of the two pistons, together with the body, forming the working chambers (118, 119) of the damping means, the working chambers (118, 119) of the damping means being connected together by a passage (122), **characterised in that** the body of the valve has openings or passages via which the working chambers (118, 119) of the damping means can be filled or exhausted from outside, the working chambers (108a, 118) of the drive and the damping means being sealed off from one another.

2. Co-axial valve according to Claim 1, **characterised in that** pressure can be applied to the valve plug (102) in the direction of the valve seat (101) by means of a preset pressure or a pressure which can be set.

3. Co-axial valve according to either of the preceding claims, **characterised in that** the drive moves the valve plug (102) via the control tube (105).

4. Co-axial valve according to Claim 1, **characterised in that** the passage (122) is arranged in the piston (116) or in the part or parts of the body of the valve which forms or form the cylinder.

5. Co-axial valve according to Claim 4, **characterised in that** the resistance to flow of the passage or bypass (122) can be set or varied.

6. Co-axial valve according to either of Claims 4 and 5, **characterised in that** the working chambers (118, 119) and the passage (122) of the damping means are filled with an incompressible medium, in particular oil.

7. Co-axial valve according to one of the preceding claims, **characterised in that** the drive has a piston (106) arranged in a cylinder (107), and the piston (106), together with the cylinder (107), forms two working chambers (108a, 108b).

8. Co-axial valve according to Claim 1, **characterised in that** a passage (126) is arranged between the seals (125) of the working chambers (108a, 118) of the drive and the damping means in such a way that a fluid which emerges from one of the working chambers (108a, 118) and flows along the control tube (105) can emerge from the body of the valve via the passage (126).

9. Co-axial valve according to Claim 1, **characterised in that** at least one of the pistons is a separate component which is in the form of, in particular, a ring, plate or disc and which is slid over the control tube (105) and, by means of locking members (127), and in particular circlips, is fastened and/or sealed to the control tube.

10. Co-axial valve according to Claim 1 or 9, **characterised in that** the piston (116) of the damping means has an axially extending passage (122) which connects the two working chambers (118, 119) of the damping means together.

11. Co-axial valve according to Claim 1 or 9, **characterised in that** the body of the valve has a passage which connects the two working chambers of the damping means together.

12. Co-axial valve according to one of the preceding claims, **characterised in that** the cavity which forms the working chambers (118, 119) of the damping means and which is formed by the cylinder is formed by means of two parts (113, 115) of the body of the valve.
